# EUROPÄISCHE PATENTSCHRIFT

(11) **EP 1 654 464 B1**
(45) Veröffentlichungstag und Bekanntmachung des Hinweises auf die Patenterteilung: **10.10.2007**
(21) Anmeldenummer: 04739278.2
(22) Anmeldetag: 21.05.2004
(51) Int. Cl.: F15B 1/22, F16L 55/055, G05D 7/01

(54) **VORRICHTUNG ZUM DÄMPFEN VON DRUCKSTÖSSEN**
DEVICE FOR DAMPING WATER HAMMER
DISPOSITIF D'AMORTISSEMENT DE COUPS DE BELIER

(30) Priorität: 13.08.2003 DE 10337744
(43) Veröffentlichungstag der Anmeldung: 10.05.2006
(73) Patentinhaber: HYDAC TECHNOLOGY GMBH, D-66280 Sulzbach (DE)
(72) Erfinder: BALTES, Herbert, 66679 Losheim (DE); DORR, Walter, 66333 Völklingen (DE)
(74) Vertreter: Bartels, Martin Erich Arthur
(86) Internationale Anmeldenummer: PCT/EP2004/005451
(87) Internationale Veröffentlichungsnummer: WO 2005/024244

(56) Entgegenhaltungen:
- EP-A- 0 230 715
- EP-A- 0 533 527
- FR-A- 2 542 403
- GB-A- 1 163 335
- PATENT ABSTRACTS OF JAPAN Bd. 1999, Nr. 13, 30. November 1999 (1999-11-30) -& JP 11 230101 A (KAYABA IND CO LTD), 27. August 1999 (1999-08-27)

## Beschreibung

Die Erfindung betrifft eine Vorrichtung zum Dämpfen von Druckstößen bei Hydrospeichern, insbesondere bei Kolbenspeichern, gemäß der Merkmalsgestaltung des Oberbegriffs des Patentanspruches 1.

Hydrospeicher sind in einer Vielzahl von Ausführungsformen auf dem Markt frei erhältlich. Die wesentlichen Anwendungen dahingehender Hydrospeicher liegen in der Energiespeicherung, der Notbetätigung, der Leckölkompensation sowie der Schockabsorption und Pulsationsdämpfung. Die häufigsten Bauformen an Hydrospeichern sind solche mit Trennglied und in Abhängigkeit des jeweils eingesetzten Trenngliedes werden Blasenspeicher, Membranspeicher und Kolbenspeicher voneinander unterschieden. Die Wirkungsweise aller dieser Speicher basiert darauf, dass die Kompressibilität eines Gases zur Flüssigkeitsspeicherung ausgenutzt wird, wobei häufig Stickstoff als Energieträger dient. Somit bestehen die hydropneumatischen Speicher aus einem Flüssigkeits- und einem Gasteil mit einem gasdichten Trennelement. Der Flüssigkeitsteil steht dabei mit dem hydraulischen Netz in Verbindung, so dass beim Ansteigen des Druckes das Gas auf der Gasseite im Speicher komprimiert wird. Analog kann bei einem Druckabfall auf der Netzseite das verdichtete Gas im Speicher expandieren und die gespeicherte Hydraulikflüssigkeit wird dadurch wieder in das Netz verdrängt.

Der klassische Aufbau eines Kolbenspeichers ist durch ein äußeres Zylinderrohr als Speichergehäuse charakterisiert, in dem ein Kolben mit seinem Dichtungssystem längsverfahrbar aufgenommen ist. Stirnseitige Verschlußdeckel am Speichergehäuse begrenzen zwei Arbeitsräume im Speicher, von denen wiederum der eine das Gas aufnimmt und der andere fluidführend an das hydraulische Netz angeschlossen ist.

Um auftretende Druckstöße im Speicherinneren eines Hydrospeichers zu mindern, sind im Stand der Technik bereits Dämpfungsvorrichtungen (Membranspeicher SB 0210-0,32E2 der Firma Hydäc) vorgeschlagen worden, die an der Fluideintrittsseite des Speichers und als integraler Bestandteil desselben ein in Längsrichtung des Speichers verfahrbares Ventilteil aufweisen, das in einem Ventilgehäuse geführt und mit einer Durchtrittsstelle für Fluid versehen ist. Kommt es von seiten des hydraulischen Netzes zu einem Druckstoß, gelangt dieser an die Fluidanschlußstelle des Hydrospeichers und der Druckstoß im hydraulischen Netz schließt gegen den Fluidinnendruck des Speichers das Ventilteil, das dergestalt in schließende Anlage mit dem Ventilgehäuse gelangt. Über eine im Ventilteil angeordnete mittige Durchtrittsbohrung als Durchtrittsstelle gelangt jedoch nach wie vor, aber nunmehr in gedrosselter Form, Fluid vom hydraulischen Netz ins Innere des Speichers, und zwar bezogen auf seine Fluidseite.

Durch die dahingehende Androsselung des Fluidstromes bei geschlossenem Ventilteil über die in der Art einer Drossel konzipierte Durchtrittsstelle in Form der Längsbohrung ist der Druckstoß reduziert, wobei jedoch nach wie vor Fluid nunmehr mit geringerer Einströmmenge in das Innere des Speichers eintritt. Im umgekehrten Fall, also bei Abnahme des Fluiddruckes auf der hydraulischen Netzseite, veranlaßt der Speicherdruck ein Öffnen des Ventilteils und Fluid strömt vom Inneren des Speichergehäuses über freigegebene Öffnungsquerschnitte im Ventilteil ab, wobei in Abhängigkeit der Drucksituation noch ein Teil des Fluidstromes über die Durchtrittsstelle in der Art einer Drossel geführt wird. Aufgrund der Ausgestaltung der Drosselstellung bei der bekannten Lösung in der Art einer Bohrung mit kurzer Kanallänge kommt es beim Durchströmen derselben zu Turbulenzen und mithin zu Kavitätserscheinungen an den die Durchtrittsstelle begrenzenden Werkstoffteilen des Ventilteils und/oder des Speichergehäuses. Neben der schädlichen Kavitätswirkung bewirken die Turbulenzen aber auch, dass der Fluidstrom in und aus dem Speicher gestört ist, was sich nachteilig auf die gesamte Energiebilanz von Speichern nebst hydraulischem Netz auswirken kann. Des weiteren ist das Öffnen und Schließen des Ventilteils mit einer relevanten Geräuschentwicklung verbunden, was beim Betrieb dahingehender hydraulischer Anlagen sich sehr störend auswirken kann.

Durch die DE 102 14 871 A1 ist eine Vorrichtung zum Dämpfen von Druckstößen bekannt, insbesondere in der Art eines Druckmittelspeichers mit einem Gehäuse, dessen Innenraum durch ein Medientrennungselement in zwei Kammern unterteilt ist, wobei die erste Kammer mit einem Gas und die zweite Kammer mit einer Flüssigkeit gefüllt ist und wobei in einem hydraulischen Anschluß ein Bodenventil vorgesehen ist, das ein Befüllen der zweiten Kammer mit Flüssigkeit ermöglicht und ein vollständiges Entleeren der zweiten Kammer verhindert, dessen Schließkörper durch das Medientrennungselement betätigbar ist. Ferner sind Mittel zum Drosseln des während des Füllvorganges der zweiten Kammer zuzuführenden Druckmittelvolumenstroms vorgesehen, die erst nach vollständiger Öffnung des Bodenventils den vollen Druckmittelvolumenstrom freigeben.

Durch die FR-A-2 542 403 ist eine gattungsgemäße Vorrichtung zum Dämpfen von Druckstößen bei Hydrospeichern bekannt, die Bestandteil des Speichers ist und die in der Art einer Drossel auf die Fluidströmung einwirkt, die sich zwischen Teilen des Speicherinneren und einem hydraulischen Netz einstellt, an das der Speicher anschließbar ist, wobei die Drossel aus mindestens einer Durchtrittsstelle vorgebbaren Querschnitts in einem Ventilteil gebildet ist, das in seiner einen Ventilstellung bis auf die jeweilige Durchtrittsstelle den Fluidstrom unterbricht und in der anderen Ventilstellung im wesentlichen frei gibt, wobei die jeweilige Durchtrittsstelle an mindestens einem ihrer freien Enden mit einer trichterförmigen Erweiterung versehen ist, und wobei die Erweiterung sich in Richtung des Speicherinneren oder des hydraulischen Netzes orientiert. Bei der bekannten Lösung ist das Ventilteil stationär an der Unterseite des Speichergehäuses festgelegt und in konzentrischer Anordnung von weiteren Fluiddurchtrittsstellen umfaßt, was materialschädigende Kavitationserscheinungen im Betrieb des Speichers mit sich bringen kann.

Durch die EP-A-0 533 527 ist es weiter bekannt, bei einer vergleichbaren Vorrichtung zum Dämpfen von Druckstößen bei einem Hydrospeicher ein verfahrbares Ventilteil mit ausschließlich einer mittig angeordneten, drosselnden Fluiddurchtrittsstelle an ihrem jeweils freien Ende mit unterschiedlich sich erweiternden Abschlußtrichtern zu versehen; allein das dahingehende Ventilteil ist Bestandteil einer gummielastischen Membran, die im Speichergehäuse zwischen Anstoßlagen hin und her schwingend im Betrieb des Speichers die gewünschte Fluiddrosselung vornimmt. Aufgrund der elastischen Nachgiebigkeit der Membranführung für das Ventilteil sind gleichfalls Kavitationserscheinigungen nicht auszuschließen, und im lang andauernden Betrieb ist mit einem Ausfall der relativ empfindlichen Membranführung für das Ventilteil zu rechnen. Zwar schlägt insoweit die GB-A-1 163 335 ein Ventilteil vor, das in einem als Führung dienenden massiv ausgebildeten Anschlußstutzen des Speichergehäuses längs verschiebbar geführt ist und für den Fluiddurchtritt bei entsprechender Androsselung über im Durchmesser unterschiedlich dimensionierte Fluiddurchtrittsstellen verfügt, die das Ventilteil in axialer Richtung durchgreifen; allein kommt es bei der dahingehenden Ausgestaltung zu deutlichen Geräuschemissionen und aufgrund der auftretenden Turbulenzen im Ausgangsbereich der drosselnden Durchtrittsstellen zu einer nachteiligen Energiebilanz.

Ausgehend von diesem Stand der Technik liegt der Erfindung die Aufgabe zugrunde, die bekannten Dämpfungsvorrichtungen dahingehend weiter zu verbessern, dass Geräuschemissionen weitestgehend im Betrieb vermieden sind, dass die Gesamt-Energiebilanz von dahingehenden Speicherlösungen verbessert ist und es nicht zu materialschädigenden Kavitätserscheinungen kommt. Eine dahingehende Aufgabe löst eine Vorrichtung mit den Merkmalen des Patentanspruches 1 in seiner Gesamtheit.

Dadurch, dass gemäß dem kennzeichnenden Teil des Patentanspruches 1 das Ventilteil in der Art eines axial verfahrbaren Ventilkolbens ausgebildet ist, der über stegartige Verlängerungen an einem seiner Enden verfügt, ist eine sichere Führung des Ventilteils in seinem Ventilgehäuse oder entlang von Teilen des Speichers im Bereich der Fluidanschlußstelle erreicht. Die jeweils vorgesehene trichterförmige Erweiterung führt bei der erfindungsgemäßen Lösung nicht nur zu einer Geräuschreduzierung sondern der in die Durchtrittsstelle eingeleitete Druckstoß wird fluidmechanisch derart beherrscht, dass Turbulenzen und mithin Kavitätserscheinungen am Ventilteil vermieden sind. Des weiteren hat es sich gezeigt, dass durch die trichterförmige Erweiterung für die jeweilige Durchtrittsstelle insgesamt das laminare Ein- und Ausströmverhalten für das Fluid in bzw. aus dem Speicher verbessert ist, was sich gesamt-energiebilanzmäßig günstig auf den Betrieb einer Hydraulikanlage auswirkt.

Vorzugsweise ist vorgesehen, dass die stegartigen Verlängerungen außenumfangsseitig mit zylindrischen Führungsflächen entlang des Gehäuses des Ventilteiles geführt sind, über das sich das Ventilteil an einem Gehäuseende des Speichers festlegen läßt.

Mit der erfindungsgemäßen Dämpfungsvorrichtung, im wesentlichen bestehend aus dem in einem Ventilgehäuse geführten Ventilteil nebst Durchtrittsstelle mit endseitig angeordneten trichterförmigen Erweiterungen sowie den stegartigen Verlängerungen, ist eine Art Wechsel-Drosselsystem gebildet, das es erlaubt, entweder beim Fluideintritt in den Speicher druckstoßbedingt das Ventilteil zu schließen und den Druckstoß über die Durchtrittsstelle anzudrosseln, wobei dann in umgekehrter Richtung über das Öffnen des Ventilteiles im wesentlichen der Fluidweg freigegeben wird, für eine ungehemmte Fluidströmung vom Inneren des Speichers in das hydraulische Netz; es besteht aber auch die Möglichkeit, die genannte Einbaufolge umzudrehen, insbesondere das Ventilteil um 180° gedreht in seinem Ventilgehäuse anzuordnen, mit der Folge, dass dann das Ausströmen aus dem Speicher in Richtung des hydraulischen Netzes durch Schließen des Ventilteiles und über die Durchtrittsstelle angedrosselt wird, wohingegen in umgekehrter Richtung bei Einströmen von Fluid vom hydraulischen Netz in den Speicher diese entlang den stegartigen Verlängerungen im wesentlichen ungestört vonstatten geht, wobei der freie Fluidquerschnitt der drosselartigen Durchtrittsstelle noch mit einbezogen ist.

Bei einer bevorzugten Ausführungsform der erfindungsgemäßen Dämpfungsvorrichtung ist die jeweilige Durchtrittsstelle aus einem Mittenkanal im Ventilteil gebildet, wobei die trichterförmige Erweiterung an beiden Enden des Mittenkanals vorhanden ist. Vorzugsweise ist dabei auch nur eine Durchtrittsstelle im Ventilteil entlang seiner Längsachse vorhanden. Der genannte Mittenkanal läßt sich von seiner Gesamtlänge her entsprechend groß auslegen, was sich günstig auf das Gesamt-Strömungsverhalten innerhalb der Durchtrittsstelle in den beiden endseitig angeordneten trichterförmigen Erweiterungen auswirkt.

Weitere vorteilhafte Ausführungsformen der erfindungsgemäßen Dämpfungsvorrichtung sind Gegenstand der sonstigen Unteransprüche.

Im folgenden wird die erfindungsgemäße Dämpfungsvorrichtung anhand eines Ausführungsbeispiels nach der Zeichnung näher erläutert. Dabei zeigen in prinzipieller und nicht maßstäblicher Darstellung die
- Fig.1: einen Längsschnitt durch die Dämpfungsvorrichtung, eingebaut in die Fluidanschlußstelle eines nicht näher dargestellten Hydrospeichers, insbesondere in Form eines Kolbenspeichers;
- Fig.2: in der Art einer Explosionszeichnung die wesentlichen Teile der Dämpfungsvorrichtung, bestehend aus einem Ventilgehäuse und dem Ventilteil.

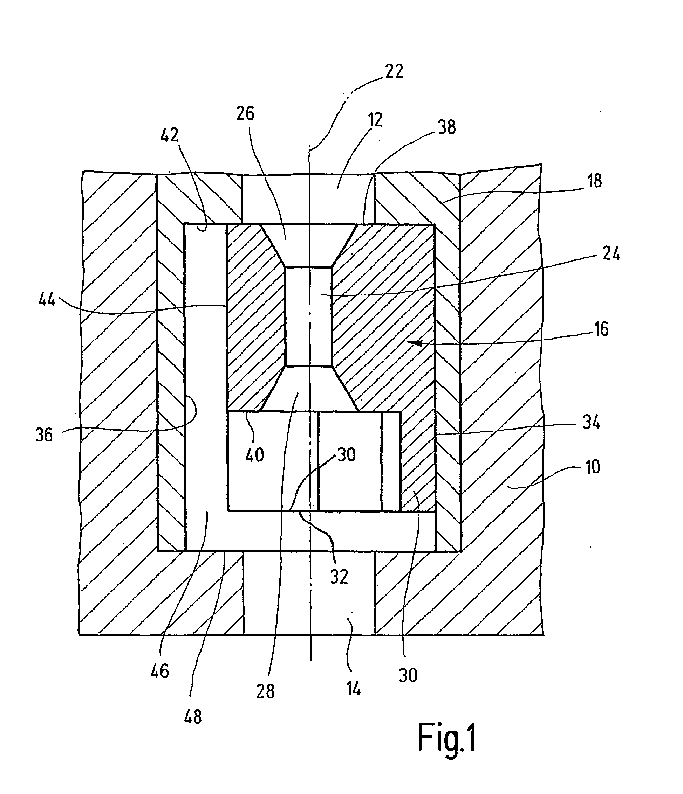

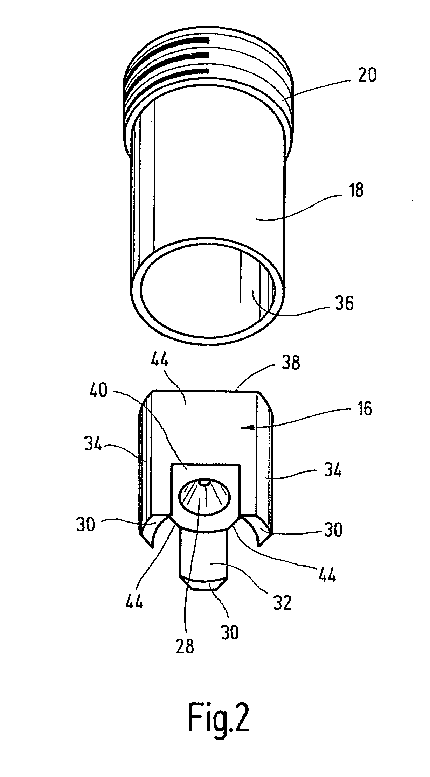

Die in den Zeichnungen dargestellte Vorrichtung dient dem Dämpfen von Druckstößen bei Hydrospeichern, insbesondere bei Kolbenspeichern üblicher Bauart, wobei in der Fig.1 nur ein Teil einer Speichergehäusewandung 10 eines Kolbenspeichers wiedergegeben ist, das auch den Deckelteil eines üblichen Speichergehäuses bilden kann. Der Aufbau von Kolbenspeichern ist im Stand der Technik allgemein bekannt und beispielsweise im "Hydrauliktrainer", Band 3, der Mannesmann-Rexroth AG eingehend beschrieben. Soweit in der Fig.1 ein Teil 10 des Gesamtspeichergehäuses dargestellt ist, betrifft der dahingehende Ausschnitt die Fluideintrittsstelle 12 des Speichers und über eine Anschlußstelle 14 läßt sich die dahingehende Fluideintrittsstelle 12 des Speichergehäuses 10 an ein nicht näher spezifiziertes und dargestelltes hydraulisches Netz mit weiteren hydraulischen Einrichtungen, beispielsweise in Form von Arbeitszylindern, Hydropumpen od. dgl., anschließen. Auch der dahingehende Aufbau und Anschluß von Speichern an hydraulische Netze ist im Stand der Technik hinreichend bekannt, so dass an dieser Stelle hierauf nicht mehr näher eingegangen wird. Zwischen Fluideintrittsstelle 12 und Anschlußstelle 14 ist das Kammervolumen des Speichers zur Aufnahme eines als Ganzes mit 16 bezeichneten Ventilteils erhöht. Das dahingehende Ventilteil 16 ist längsverfahrbar entlang einer vorgebbaren Wegstrecke in einem kreiszylindrischen Ventilgehäuse 18 geführt, das an seinem in Blickrichtung auf die Fig.2 gesehen oberen Ende mit einem Gewinde 20 versehen ist zum Einschrauben des Ventilgehäuses 18 entlang der Innenwand des Speichergehäuses 10 (in Fig.1 nicht dargestellt). Die Fig.1 betrifft des weiteren einen Längsschnitt durch das Ventilteil 16 nebst Ventilgehäuse 18, wie dies in der Fig.2 in der Art einer Explosionszeichnung dargestellt ist.

Mit dem genannten Ventilteil 16 läßt sich dergestalt auf die Fluidströmung einwirken, die sich zwischen Teilen des Speicherinneren und dem hydraulischen Netz einstellt, also zwischen der Fluideintrittsstelle 12 und der Anschlußstelle 14 an das Netz. Für die dahingehende Ansteuerung weist das Ventilteil 16 entlang seiner Längsachse 22, die deckungsgleich ist mit der Längsachse des Speichergehäuses 10, eine einzige Durchtrittsstelle 24 in der Art eines Mittenkanals auf. Der dahingehende Mittenkanal weist an seinen beiden Enden jeweils eine trichterförmige Erweiterung 26,28 auf, wobei die in Blickrichtung auf die Fig.1 gesehen obere trichterförmige Erweiterung 26 sich in Richtung der Fluideintrittsstelle 12 erweiternd in diese mündet. Die weitere trichterförmige Erweiterung 28 am gegenüberliegenden unteren Ende erweitert sich trichterförmig in Richtung der Anschlußstelle 14 an das nicht näher dargestellte hydraulische Netz. Des weiteren ist die Gesamtlänge der beiden Erweiterungen 26,28 gemessen in Richtung der Längsachse 22 etwas geringer als die Gesamtlänge des sich zwischen den beiden Erweiterungen 26,28 erstreckenden kreiszylindrischen Mittenkanals, der neben den beiden Erweiterungen 26,28 die Durchtrittsstelle 24 bildet. Des weiteren ist der größte Durchmesser der jeweiligen Erweiterung 26,28 kleiner gewählt als der Durchmesser der benachbart zuordenbaren Fluideintrittsstelle 12 bzw. Anschlußstelle 14. Aufgrund der Erweiterungen 26,28 sind scharfkantige Materialübergänge vermieden, was sich unter anderem günstig auf ein niedriges Geräuschemissionsverhalten auswirkt.

Wie sich des weiteren aus der Fig.2 ergibt, ist das Ventilteil 16 in der Art eines Ventilkolbens ausgebildet, der in Blickrichtung auf die Fig.2 gesehen an seinem unteren Ende mit drei stegartigen Verlängerungen 30 versehen ist. In Umfangsrichtung des Ventilteils 16 betrachtet weisen alle drei stegartigen Verlängerungen 30 einen konstanten Abstand voneinander auf. Gemäß der Längsschnittdarstellung ist in der Fig.1 nur der in Blickrichtung auf die Fig.2 gesehen äußerst rechte Verlängerungssteg 30 dargestellt und der nachfolgende Verlängerungssteg 30 in stirnseitiger Ansicht, wobei die dahingehende Ansichtsfläche in den Figuren mit 32 wiedergegeben ist. Die stegartigen Verlängerungen 30 sind außenumfangsseitig mit zylindrischen Führungsflächen 34 versehen, die dergestalt das Entlanggleiten des Ventilkolbens entlang des Innenumfangs 36 des kreiszylindrischen Ventilgehäuses 18 erlauben. Das Ventilteil 16 ist an seinen beiden einander gegenüberliegenden Enden mit ebenen Abschlußflächen 38,40 versehen, von denen in Blickrichtung auf die Fig.1 gesehen die obere in Anlage bringbar ist mit einer ebenso eben verlaufenden Anlagefläche 42 des Ventilgehäuses 18, bzw. an die sich an der gegenüberliegenden Unterseite die stegartigen Verlängerungen 30 anschließen. Des weiteren beträgt die Teilbaulänge des Ventilteils 16 mit der Durchtrittsstelle 24 mehr als die Hälfte der Gesamt-Baulänge des Ventilteils 16 mit den Verlängerungsstegen 30.

Wie sich des weiteren aus der Fig.2 ergibt, ist das Ventilteil 16 außenumfangsseitig im Bereich der Durchtrittsstelle und zwischen den Verlängerungsstegen 30 verlaufend mit ebenen Flächen 44 ausgestattet, die mit der kreiszylindrischen Innenumfangsfläche 36 des Ventilgehäuses 18 drei Fluiddurchlässe 46 begrenzen (vgl. Fig.1). Ferner enden die stegartigen Verlängerungen 30 in einer gemeinsamen horizontalen Ebene, die parallel verläuft zu den Abschlußflächen 38 und 40 des Ventilteils 16. Das Ventilteil 16 kann sich innerhalb seines Ventilgehäuses 18 in Abhängigkeit von den Druck- und Strömungsverhältnissen entlang seiner Längsachse 22 von seiner in der Fig.1 gezeigten Schließstellung nach unten hin in eine geöffnete Stellung bewegen, bei der die freien Enden der Verlängerungsstege 30 in Anlage kommen mit der unteren Abschlußwand 48 des Speichergehäuses 10, das in diesem Bereich die Anschlußstelle 14 randseitig begrenzt. Der dahingehende axiale Verfahrweg ist gemäß der Darstellung nach der Fig.1 etwas kleiner als die Höhe einer der trichterförmigen Erweiterungen 26,28.

Bei der in der Fig.1 gezeigten Betriebsstellung hat sich über das hydraulische Netz an der Anschlußstelle 14 ein hydraulischer Druckstoß eingestellt, der das Ventilteil 16 in seine in der Fig.1 gezeigte Schließstellung gebracht hat, bei der die Abschlußfläche 38 in Anlage ist mit der Anlagefläche 42 des Ventilgehäuses 18. Der Fluiddurchtritt von der Anschlußstelle 14 zur Fluideintrittsstelle 12 und mithin ins Innere des Speichergehäuses 10 erfolgt somit ausschließlich über die drosselartige Durchtrittsstelle 24 mit ihren beiden trichterförmigen Erweiterungen 26,28. Durch die dahingehende Drosselstelle wird zum einen der Druckstoß gemindert, so dass dieser keine schädigende Wirkung im Inneren des Speichergehäuses 10 ausüben kann, und zum anderen wird über die kontinuierlich verlaufenden Erweiterungen 26,28 der Fluidstrom über den Mittenkanal als Durchtrittsstelle 24 derart gerichtet, dass schädliche Kavitätswirkungen in den Randbereichen des Ventilteils 16 oder der Fluideintrittsstelle 12 vermieden sind. Ferner wird über die lange Führungsstrecke des Mittenkanals eine laminare Vorgabe für die Fluidströmung erreicht, so dass Strömungsverluste vermeiden sind, was sich wiederum günstig auf die Gesamt-Energiebilanz des hydraulischen Systems (nicht dargestellt) auswirkt. Die trichterförmigen Erweiterungen 26,28 haben dabei noch den Effekt, dass es zu einer Entspannung der hochlaminaren Strömung im Mittenkanal kommt, was sich günstig auf die Geräuschemissionsentwicklung auswirkt und es ist für einen Durchschnittsfachmann auf dem Gebiet hydraulischer Systeme und Hydrospeicher überraschend, dass er durch Einsatz der genannten Erweiterungen 26,28 eine derart deutliche Geräuschminderung erhält, dass verbleibende Restgeräusche für das Bedienpersonal der hydraulischen Anlage kaum wahrnehmbar sind.

Sinkt der hydraulische Druckstoß und mithin der Hydraulikdruck an der Anschlußstelle 14 ab, wird in üblicher Einbaulage des Ventilteils 16 schwerkraftunterstützt und mit dem verbleibenden Innendruck im Hydrospeicher dieses in Blickrichtung auf die Fig.1 nach unten geschoben und die freien Enden der stegartigen Verlängerungen schlagen an der unteren Abschlußwand 48 an. Dergestalt ist dann aber der Fluiddurchtrittsweg von der Fluideintrittsstelle 12 zum Fluiddurchlaß 46 freigegeben und dergestalt kann Fluid vom Inneren des Speichers und weiter über die Abstände zwischen den stegartigen Verbreiterungen 30 in Richtung der Anschlußstelle 14 und von dort aus in das hydraulische Netz zurückgelangen. Dabei kommt es zu einer Aufteilung der Fluidströme zwischen den drei Fluiddurchlässen 46 begrenzt durch den Außenumfang des Ventilteils 16 und seiner Mittenausnehmung in Form der Durchtrittsstelle 24. Dergestalt entspricht der freie Öffnungsquerschnitt im wesentlichen dem Fluidquerschnitt ohne Ventilteil 16, so dass im wesentlichen verlustfrei der Austragvorgang an hydraulischer Energie vom Inneren des Speichergehäuses an das hydraulische Netz vonstatten gehen kann.

Die vorliegende Einrichtung ist als Wechseldrosselkonzept ausgelegt und es besteht die Möglichkeit, quer zur Längsachse 22 gesehen das Ventilteil 16 um 180° verschwenkt in das Ventilgehäuse 18 einzusetzen, so dass dergestalt dann in Blickrichtung auf die Fig.1 gesehen die stegartigen Verbreiterungen 30 sich in Richtung des Speichers und mithin in Richtung der Fluideintrittsstelle 12 erstrecken und die Abschlußfläche 38 des Ventilsteils 16 in Richtung zu der Anschlußstelle 14 weist. Im dahingehenden Fall kann bei bestimmten Speicherkonzeptionslösungen dann vorgesehen sein, dass ein vom hydraulischen Netz kommender Druckstoß an die Anschlußstelle 14 über die drei Fluiddurchlässe 46 ungehindert in das Speicherinnere gelangen kann, wobei ein Anteil des Fluidstromes wiederum über die Durchtrittsstelle 24 gelangt, wohingegen dann ein Fluidabgabevorgang von seiten des Speichers gedämpft erfolgt, indem das Ventilteil 16 mit seiner Abschlußfläche 38 die Anschlußstelle an das hydraulische Netz 14 verschließt und der Durchtritt an Fluid ausschließlich über die drosselnde Durchtrittsstelle 24 mit ihren trichterförmigen Erweiterungen 26,28 erfolgt. Somit lassen sich also dem Grunde nach bei umgekehrter Einbaulage der als Wechseldrossel konzipierten Lösung vom Speicher, insbesondere vom Kolbenspeicher stammende Druckstöße mindern. Mit der erfindungsgemäßen Dämpfungsvorrichtung ist also ein Gesamt-System geschaffen, das sich ohne größere Umbaumaßnahmen an verschiedene Anwendungsfälle und deren Vorgaben anpassen läßt.

## Patentansprüche

1. Vorrichtung zum Dämpfen von Druckstößen bei Hydrospeichern, insbesondere Kolbenspeichern, die Bestandteil des Speichers ist und die in der Art einer Drossel auf die Fluidströmung einwirkt, die sich zwischen Teilen des Speicherinneren (12) und einem hydraulischen Netz (14) einstellt, an das der Speicher anschließbar ist, wobei die Drossel aus mindestens einer Durchtrittsstelle (24) vorgebbaren Querschnitts in einem Ventilteil (16) gebildet ist, das in seiner einen Ventilstellung bis auf die jeweilige Durchtrittsstelle (24) den Fluidstrom unterbricht und in der anderen Ventilstellung im wesentlichen freigibt, wobei_die jeweilige Durchtrittsstelle (24) an mindestens einem ihrer freien Enden mit einer trichterförmigen Erweiterung (26;28) versehen ist, und wobei die Erweiterung (26;28) sich in Richtung des Speicherinneren (12) oder des hydraulischen Netzes (14) orientiert, **dadurch gekennzeichnet, dass** das Ventilteil (16) in der Art eines axial verfahrbaren Ventilkolbens ausgebildet ist, der über stegartige Verlängerungen (30) an einem seiner Enden verfügt.

2. Dämpfungsvorrichtung nach Anspruch 1, **dadurch gekennzeichnet, dass** die jeweilige Durchtrittsstelle (24) aus einem Mittenkanal im Ventilteil (16) gebildet ist und dass die trichterförmige Erweiterung (26;28) an beiden Enden des Mittenkanals vorhanden ist.

3. Dämpfungsvorrichtung nach Anspruch 1 oder 2, **dadurch gekennzeichnet, dass** das Ventilteil (16) außenumfangsseitig mit zylindrischen Führungsflächen (34) entlang eines Gehäuses (18) geführt ist, über das sich das Ventilteil (16) an einem Gehäuseende (10) des Speichers festlegen läßt.

4. Dämpfungsvorrichtung nach Anspruch 3, **dadurch gekennzeichnet, dass** außenumfangsseitig und zwischen den Verlängerungsstegen (30) das Ventilteil (16) mit ebenen Flächen (44) versehen ist, die mit der kreiszylindrischen Innenumfangsfläche (36) des Ventilgehäuses (18) Fluiddurchlässe (46) begrenzt.

5. Dämpfungsvorrichtung nach Anspruch 3 oder 4, **dadurch gekennzeichnet, dass** das Ventilteil (16) endseitig mit ebenen Abschlußflächen (38,40) versehen ist, von denen die Abschlußfläche (38) in Anlage bringbar ist mit einer ebenso eben verlaufenden Anlagefläche (42) des Ventilgehäuses (18) bzw. an die sich die stegartigen Verlängerungen (30) anschließen.

6. Dämpfungsvorrichtung nach einem der Ansprüche 1 bis 5, **dadurch gekennzeichnet, dass** die Teilbaulänge des Ventilteils (16) mit der Durchtrittsstelle (24) mehr als die Hälfte der Gesamt-Baulänge des Ventilteils (16) mit den Verlängerungsstegen (30) beträgt.

7. Dämpfungsvorrichtung nach einem der Ansprüche 2 bis 6, **dadurch gekennzeichnet, dass** die trichterförmigen Erweiterungen (26,28) entlang von eben verlaufenden Abschlußflächen (38,40) aus dem Ventilteil (16) austreten.

8. Dämpfungsvorrichtung nach einem der Ansprüche 3 bis 7, **dadurch gekennzeichnet, dass** das Ventilgehäuse (18) außenumfangsseitig mit einem Gewinde (20) zum Festlegen an den Teilen des Speichergehäuses (10) versehen ist.

## Claims

1. Means for damping impact pressure in hydro stores, in particular piston stores, forming a part of the store, and acting upon the fluid stream in the way of a throttle that can be adjusted between sections of the store interior (12) and a hydraulic network (14), with which the store can be connected, whereby the throttle is formed from at least one passage (24) with a predeterminable cross-section within a valve (16), which interrupts the fluid stream with the exception of the relevant passage (24) in one valve position, and substantially releases the same in the other valve position, whereby the relevant passage (24) is equipped with a funnel-shaped widening (26;28) on at least one of its free ends, and whereby the widening (26;28) is orientated in the direction of the store interior (12) or the hydraulic network (14), **characterised in that** the valve (16) is designed in the way of an axially displaceable valve piston equipped with bridge-like extensions (30) at its one end.

2. Damping means according to Claim 1, **characterised in that** the relevant passage (24) is formed from a central channel in the valve (16), and **in that** the funnel-shaped widening (26,28) is provided at both ends of the central channel.

3. Damping means according to Claim 1 or 2, **characterised in that** the outer circumference of the valve (16) is equipped with cylindrical guide surfaces (34) along a housing (18), with which the valve (16) can be affixed to a housing end (10) of the store.

4. Damping means according to Claim 3, **characterised in that** the outer circumference of the valve (16) is equipped with planar surfaces (44) between the extension bridges (30), the same delimiting fluid passages (46) together with the circular cylindrical inner circumference surface (36) of the valve housing (18).

5. Damping means according to Claim 3 or 4, **characterised in that** the valve (16) is equipped with planar closing surfaces (38, 40) at its ends, whereby the closing surfaces (38) can be abutted against abutment surfaces (42) of the valve housing (18) extending in parallel, e.g. following on from the bridge-like extensions (30).

6. Damping means according to one of the Claims 1 to 5, **characterised in that** the construction section of the valve (16) and the passage (24) represents more than half of the overall construction length of the valve (16) and the extension bridges (30).

7. Damping means according to one of the Claims 2 to 6, **characterised in that** the funnel-shaped widenings (26;28) open out from the valve (16) from planar closing surfaces (38, 40).

8. Damping means according to one of the Claims 3 to 7, **characterised in that** the outer circumference of the valve housing (18) is equipped with a thread (20) for affixing the same to sections of the store housing (10).

## Revendications

1. Dispositif d'amortissement de coups de bélier dans des accumulateurs hydrauliques, notamment des accumulateurs à piston, qui fait partie de l'accumulateur et agit à la manière d'un étranglement sur l'écoulement de fluide s'établissant entre des parties de l'intérieur (12) de l'accumulateur et un réseau hydraulique (14) auquel peut être raccordé l'accumulateur, l'étranglement étant formé par au moins un passage (24) de section pouvant être prédéterminée dans un élément d'obturation de soupape (16) qui dans l'une des positions de soupape, interrompt, exception faite du passage (24) considéré, l'écoulement de fluide et le libère sensiblement dans l'autre position de soupape, le passage (24) considéré étant pourvu à l'une au moins de ses extrémités libres, d'un évasement (26 ; 28) en forme d'entonnoir, et l'évasement (26 ; 28) s'orientant en direction de l'intérieur (12) de l'accumulateur ou en direction du réseau hydraulique (14),
**caractérisé en ce que** l'élément d'obturation de soupape (16) est conçu à la manière d'un piston de soupape mobile axialement, qui dispose de prolongements (30) en forme de talons à l'une de ses extrémités.

2. Dispositif d'amortissement selon la revendication 1, **caractérisé en ce que** le passage (24) considéré est formé par un canal central dans l'élément d'obturation de soupape (16), et **en ce que** l'évasement (26 ; 28) en forme d'entonnoir est prévu aux deux extrémités du canal central.

3. Dispositif d'amortissement selon la revendication 1 ou 2, **caractérisé en ce que** l'élément d'obturation de soupape (16) est guidé du côté de sa périphérie extérieure, avec des surfaces de guidage (34) cylindriques, le long d'un carter (18) par l'intermédiaire duquel l'élément d'obturation de soupape (16) peut être fixé à une extrémité de carter (10) de l'accumulateur.

4. Dispositif d'amortissement selon la revendication 3, **caractérisé en ce que** du côté de la périphérie extérieure et entre les talons de prolongement (30), l'élément d'obturation de soupape (16) est pourvu de surfaces planes (44) qui délimitent avec la surface périphérique intérieure (36) cylindrique circulaire du carter de soupape (18), des passages de fluide (46).

5. Dispositif d'amortissement selon la revendication 3 ou 4, **caractérisé en ce que** l'élément d'obturation de soupape (16) est pourvu à ses extrémités, de surfaces terminales (38, 40) planes, dont la surface terminale (38) peut être amenée en appui sur une surface d'appui (42) également d'étendue plane du carter de soupape (18), et respectivement à laquelle se raccordent les prolongements (30) en forme de talon.

6. Dispositif d'amortissement selon l'une des revendications 1 à 5, **caractérisé en ce que** la longueur d'encombrement partielle de l'élément d'obturation de soupape (16) comprenant le passage (24), vaut plus de la moitié de la longueur d'encombrement totale de l'élément d'obturation de soupape (16) avec les talons de prolongement (30).

7. Dispositif d'amortissement selon l'une des revendications 2 à 6, **caractérisé en ce que** les évasements (26, 28) en forme d'entonnoir débouchent de l'élément d'obturation de soupape (16) le long de surfaces terminales (38, 40) d'étendue plane.

8. Dispositif d'amortissement selon l'une des revendications 3 à 7, **caractérisé en ce que** le carter de soupape (18) est pourvu sur le côté de sa périphérie extérieure, d'un filetage (20) pour la fixation aux parties du carter d'accumulateur.
